# EUROPÄISCHE PATENTSCHRIFT

(11) **EP 0 806 306 B1**
(45) Veröffentlichungstag und Bekanntmachung des Hinweises auf die Patenterteilung: **06.08.2003**
(21) Anmeldenummer: 97107289.7
(22) Anmeldetag: 02.05.1997
(51) Int. Cl.: B60C 23/04

(54) **Luftdruck-Kontrollsystem für ein Kraftfahrzeug und Verfahren zu seiner Zuordnung zu einer Radposition**
Tyre pressure monitoring system of an automobile and method of allocating it to a tire position
Système de surveillance de pression des pneumatiques d'un véhicule automobile et procédé de son adjonction à la position d'un pneumatique

(30) Priorität: 09.05.1996 DE 19618658
(43) Veröffentlichungstag der Anmeldung: 12.11.1997
(73) Patentinhaber: Continental Aktiengesellschaft, 30165 Hannover (DE)
(72) Erfinder: Ernst, Gerhard, Dr., 30629 Hannover (DE)

(56) Entgegenhaltungen:
- EP-A- 0 739 761
- EP-A- 0 760 299
- DE-A- 4 205 911

## Beschreibung

Die Erfindung betrifft ein Verfahren zur Durchführung der Zuordnung der Radposition zu Luftdruckkontrollvorrichtungen in einem Luftdruckkontrollsystem eines Kraftfahrzeuges und ein Luftdruckkontrollsystem eines Kraftfahrzeuges.

Die richtige Einstellung des Luftdrucks von Kraftfahrzeugrädern ist im Hinblick auf unterschiedliche Aspekte wichtig. Einerseits führt ein zu hoher oder ein zu niedriger Luftdruck zu einem erhöhten Reifenverschleiß, so daß die Kraftfahrzeugreifen vorzeitig ausgetauscht werden müssen, was unnötige Kosten verursacht. Andererseits birgt insbesondere ein zu niedriger Luftdruck ein erhebliches Sicherheitsrisiko in sich, da er eine erhöhte Walkarbeit der Reifenflanken verursacht, was zu einer starken Temperaturerhöhung des Kraftfahrzeugreifens führt. Infolgedessen nimmt die Festigkeit der Reifenflanken deutlich ab, was zu einem "Platzen" des Kraftfahrzeugreifens und somit insbesondere bei hohen Geschwindigkeiten zu schweren Verkehrsunfällen führen kann.

Aus den obengenannten Gründen muß der Luftdruck von Kraftfahrzeugreifen regelmäßig überprüft werden, was von dem Kraftfahrzeugführer aus unterschiedlichen Gründen häufig versäumt wird. Deshalb sind bereits Luftdruckkontrollsysteme entwickelt worden, die jedem Rad zugeordnet eine Luftdruckkontrollvorrichtung enthalten, die den Luftdruck der Kraftfahrzeugreifen automatisch messen und zumindest eine kritische Abweichung von einem Solluftdruck dem Kraftfahrzeugführer melden. Die Luftdruckkontrollvorrichtungen können z.B. in den Reifen einvulkanisiert oder eingeklebt sein oder auch am oder im Ventil bzw. an oder in der Felge befestigt sein. Entsprechende Ausbildungen sind bekannt.

Aus der DE 42 05 911 A1 ist ein Luftdruckkontrollsystem bekannt, bei dem jedem Reifen des Kraftfahrzeuges jeweils eine Luftdruckkontrollvorrichtung zugeordnet ist. Jede Luftdruckkontrollvorrichtung übermittelt in regelmäßigen Abständen ein gemessenes Drucksignal zusammen mit einer individuellen Kennung an eine Zentraleinheit. Die Übermittlung einer individuellen Kennung zusammen mit dem Drucksignal ist deswegen besonders wichtig, weil bei dem aus der DE 42 05 911 A1 bekannten Luftdruckkontrollsystem berührungslos Daten vom Reifen zum Kraftfahrzeug übermittelt werden. Es muß daher beispielsweise ausgeschlossen werden, daß z.B. im Stau Luftdruckdaten eines benachbarten Kraftfahrzeugs empfangen werden und es aufgrund dieser Daten zu Fehlmeldungen an den Kraftfahrzeugführer kommt. Dies wird durch die individuellen Kennungen ermöglicht, da die Reifen eines anderen Kraftfahrzeuges naturgemäß andere individuelle Kennungen senden. In der Zentraleinheit sind Wertepaare der Form (Kennung der Luftdruckkontrollvorrichtung/Radposition) für jedes Rad des Kraftfahrzeuges gespeichert, so daß durch entsprechenden Vergleich in der Zentraleinheit darauf geschlossen werden kann, welche Kennung mit dem dazugehörigen Drucksignal von welcher Radposition des Kraftfahrzeuges gesendet wird. Eine Abweichung des übermittelten Drucksignals von einem vergebenen Wert an einer Radposition wird dem Kraftfahrzeugführer von der Zentraleinheit angezeigt, so daß dieser geeignete Maßnahmen einleiten kann.

Die Ausführungen zeigen, daß das aus der DE 42 05 911 A1 bekannte Luftdruckkontrollsystem nur dann einwandfrei funktionieren kann, wenn in der Zentraleinheit die Zuordnungen (Kennung der Luftdruckkontrollvorrichtung/Radposition) richtig gespeichert sind. Dementsprechend muß einerseits sichergestellt sein, daß sich diese Zuordnung während des Betriebes des Kraftfahrzeuges nicht ändert und andererseits muß eine neue Zuordnung nach jedem Reifenwechsel am Kraftfahrzeug vorgenommen werden. Um diesen beiden Randbedingungen zu genügen, ist in dem aus der DE 42 05 911 A1 bekannten Luftdruckkontrollsystem ein manuell zu betätigender Schalter vorgesehen, der nur im Stillstand des Kraftfahrzeugs umlegbar ist und das Luftdruckkontrollsystem nach einem Reifenwechsel von einem Drucküberwachungsmodus in einen Zuordnungsmodus überführt. In dem Zuordnungsmodus findet eine Zuordnung der neuen Kraftfahrzeugreifen mit den darin enthaltenden neuen Luftdruckkontrollvorrichtungen zu den Radpositionen statt, z.B. dadurch, daß die Intensität der von den einzelnen Luftdruckkontrollvorrichtungen gesendeten Signale von Empfängern, von denen jeweils einer einer Radposition fest zugeordnet ist, gemessen wird und jedes von einer Luftdruckkontrollvorrichtung ausgesendete Signal der Radposition des Kraftfahrzeugreifens zugeordnet wird, an welcher es die höchste Signalintensität erzeugt (beispielsweise wird die Signalintensität der Luftdruckkontrollvorrichtung, die sich in Reifen vorne links befindet, an dem Empfänger am größten sein, der der Radposition vorne links zugeordnet ist, so daß eine entsprechende Zuordnung festgestellt werden kann). Die entsprechenden Zuordnungen werden in der Zentraleinheit gespeichert.

Bei dem erläuterten Zuordnungsverfahren werden aufgrund der hohen Signalintensitäten an jedem Empfänger alle Signale mit nahezu gleicher Intensität empfangen, was selbstverständlich eine eindeutige Zuordnung der Luftdruckkontrollvorrichtungen in den Reifen zu den Radpositionen mit Hilfe der Signalintensitäten erschwert bzw. nicht zuläßt. Darüber hinaus werden für dieses Zuordnungsverfahren vier Empfänger benötigt, die alle mit der Zentraleinheit verbunden werden müssen. Dies treibt den Aufwand für das Luftdruckkontrollsystem in die Höhe.

Wohl aus diesen Gründen ist in der DE 42 05 911 A1 schon vorgeschlagen worden, lediglich einen Empfänger vorzusehen und die Zuordnung aktiv vorzunehmen, indem an einer fest vorgegebenen Radposition manuell eine Druckänderung vorgenommen wird und die Zentraleinheit prüft, bei welcher individuellen Kennung die Druckänderung aufgetreten ist. Die entsprechende Zuordnung (Kennung der Luftdruckkontrollvorrichtung/Radposition) wird dann abgespeichert.

Dieses Zuordnungsverfahren ist zwar als sehr sicher zu bezeichnen, es ist jedoch nur mit hohem Aufwand und von einer ungeschulten Person, wie dem Kraftfahrzeugführer, wahrscheinlich gar nicht durchzuführen.

Der Erfindung liegt die Aufgabe zugrunde, ein Verfahren zur Durchführung der Zuordnung von Luftdruckkontrollvorrichtungen zu den Radpositionen zu schaffen, daß einfach durchführbar ist und eine sichere Zuordnung erlaubt. Der Erfindung liegt ferner die Aufgabe zugrunde, ein Luftdruckkontrollsystem zur Durchführung des Verfahrens zu schaffen.

Bei einem Verfahren der eingangs genannten Art wird die Aufgabe gemäß den Merkmalen des Anspruchs 1 gelöst.

Hierbei ist hier und im folgenden unter genügender Übereinstimmung zu verstehen, daß die Meßwerte der ersten Meßvorrichtungen und zweiten Meßvorrichtungen bis auf meßtechnisch nicht zu vermeidende Ungleichheiten übereinstimmen und somit eine eindeutige Zuordnung möglich ist.

Die Aufgabe wird bei einem Luftdruckkontrollsystem der eingangs erläuterten Art ebenfalls durch den nebengeordneten Sachanspruch 7 gelöst.

Der Grundgedanke der Erfindung ist darin zu sehen, daß eine Meßgröße an jeder Radposition des Kraftfahrzeuges durch zwei unabhängige Meßvorrichtungen gemessen wird, wobei von der einen Meßvorrichtung die Radposition bekannt ist und die andere Meßvorrichtung Bestandteil der Luftdruckkontrollvorrichtung ist, die sich im Reifen des Kraftfahrzeugrades befindet.

Die Vorteile der Erfindung sind insbesondere darin zu sehen, daß das Zuordnungsverfahren nach Einschaltung des Zuordnungsmodus automatisch durchgeführt wird und somit kein geschultes Personal notwendig ist. Insbesondere kann der Kraftfahrzeugfahrer die Durchführung des Zuordnungsverfahrens z.B. nach einem Reifenwechsel selbst veranlassen. Darüber hinaus führt das Verfahren zu einer sicheren Zuordnung, da als Meßwerte nur Größen verwendet werden, die an jedem Rad des Kraftfahrzeuges zumindest zeitweise eine ausreichende "Individualtität" aufweisen. Ein weiterer Vorteil der Erfindung ist schließlich darin zu sehen, daß das Verfahren mit nur einem Empfänger durchgeführt werden kann, da keine Empfänger benötigt werden, die einer Radposition jeweils fest zugeordnet sind (wie dies beispielsweise bei der Signalintensitätsmessung der Fall ist - siehe oben - ). Dementsprechend entfällt eine aufwendige Verkabelung mehrerer Empfänger zu der Zentraleinheit, was insgesamt den Preis des Luftdruckkontrollsystems senkt.

Es hat sich gezeigt, daß eine Messung, die auf "radindividuellen Größen" basiert, in einem recht kurzen Zeitraum durchzuführen ist, da an den Kraftfahrzeugrädern aus unterschiedlichen Gründen fast immer individuelle Meßwerte vorliegen. Als geeignete Meßgröße hat sich beispielsweise die Raddrehzahl (Umdrehungen pro Zeit) bzw. jede Meßgröße, aus der die Raddrehzahl hergeleitet werden kann, erwiesen, die sowohl den Sensoren, die den Luftdruckkkontrollvorrichtungen zugeordnet sind, als auch von Sensoren, die jedem Rad des Kraftfahrzeuges zugeordnet sind, gemessen werden. Die Raddrehzahl der einzelnen Räder des Kraftfahrzeuges unterscheidet sich beispielsweise bei Kurvenfahrten, aber auch bei Geradeausfahrten liegen bereits, z.B. aufgrund unterschiedlicher Abnutzung oder aufgrund von Fertigungstoleranzen, individuelle Raddrehzahlen vor, die für eine Zuordnung der Luftdruckkontrollvorrichtungen zu den Radpositionen ausreichend sind.

Als geeignete Sensoren, die den Luftdruckkontrollvorrichtungen zugeordnet werden und der Erfassung der Raddrehzahl dienen, haben sich Magnetfeldsensoren, Fliehkraftsensoren, Schwerkraftsensoren und Beschleunigungssensoren erwiesen. Als besonders geeignet haben sich Schwerkraftsensoren erwiesen, bei denen eine kleine Masse in einem piezoelektrisch wirkenden Element eine raddrehwinkelsynchrone Ladungsverschiebung erzeugt. Beispielsweise wird in einem derartigen Element immer dann durch den einwirkenden Druck eine Ladungsverschiebung erzeugt, wenn ein Reifen des Kraftfahrzeuges und damit das in ihm enthaltene Element den Bodenaufstandspunkt des Reifens durchläuft. Die Anzahl der erzeugten Ladungsverschiebungszyklen wird in einer Auswerteschaltung des Sensors gezählt. Gleichzeitig wird mit Hilfe eines in der Auswerteschaltung enthaltenen Zeitgliedes die Zeit gemessen. Die Raddrehzahl (Umdrehungen/Zeit) kann in der Auswerteschaltung nun ermittelt werden, indem festgestellt wird, wieviel Umdrehungen das Rad mit dem entsprechenden Sensor in einem fest vorgegebenen Zeitraum gemacht hat bzw. welcher Zeitraum für eine fest vorgegebene Anzahl von Umdrehungen benötigt wird. Als Sensoren, die die Raddrehzahl messen und den einzelnen Rädern bzw. Radpositionen des Kraftfahrzeuges fest zugeordnet sind, können beispielsweise die Sensoren eines Antiblockiersystems verwendet werden, das bei vielen Kraftfahrzeugen ohnehin vorhanden ist, so daß zusätzliche Sensoren nicht benötigt werden. Die Verwendung ohnehin vorhandener Sensoren, wie den Antiblockiersensoren, trägt nochmals zu einer Kostensenkung des Luftdruckkontrollsystems bei.

Alternativ zu den Raddrehzahlen kann durch die ersten und zweiten Meßvorrichtungen die Geräuschentwicklung, das Schwingungsverhalten oder die Reifentemperatur an den einzelnen Kraftfahrzeugrädern gemessen werden. Auch hier hat es sich gezeigt, daß die entsprechenden Meßgrößen eine "ausreichende Individualität" aufweisen. Zur Messung der genannten Größen sind entsprechende Sensoren bekannt, so daß diese Sensoren hier nicht näher erläutert werden sollen.

Gemäß einer Weiterbildung des Verfahren geschieht die Einschaltung und Durchführung des Zuordnungsmodus wie folgt:
- Automatisches Einschalten des Zuordnungsmodus vor oder bei der Inbetriebnahme des Kraftfahrzeuges
- Zuordnen der Luftdruckkontrollvorrichtungen zu den Radpositionen und
- automatisches Verlassen des Zuordnungsmodus nach abgeschlossener Zuordnung.
Ein automatisches Einschalten des Zuordnungsmodus bei der Inbetriebnahme des Kraftfahrzeuges kann beispielsweise durch Einschalten der Zündung bzw. bei Betätigung des Anlassers erfolgen. Die mit der Weiterbildung erzielten Vorteile sind insbesonders darin zu sehen, daß ein manuelles Umschalten von einem Drucküberwachungsmodus in einen Zuordnungsmodus entfällt. Durch die Weiterbildung wird ferner die Sicherheit des Kraftfahrzeuges erheblich gesteigert, da bei einer automatischen Einschaltung des Zuordnungsmodus ein Einschalten des Zuordnungsmodus nicht vergessen werden kann. Ein weiterer Vorteil der Weiterbildung ist darin zu sehen, daß Fehlbedienungen seitens einer Bedienperson ausgeschlossen sind. Schließlich wird durch die Automatisierung der Bedienungskomfort des Luftdruckkontrollsystems erhöht.

Gemäß einem Ausführungsbeispiel der genannten Weiterbildung wird das Verfahren bei jeder Inbetriebnahme des Kraftfahrzeuges durchgeführt. Dadurch ist sichergestellt, daß ein zwischen der letzten Stillegung und der nächsten Inbetriebnahme des Kraftfahrzeuges durchgeführter Reifenwechsel auf jeden Fall erfaßt und eine neue Zuordnung der in den Reifen enthaltenen Luftdruckkontrollvorrichtungen zu den Radpositionen durchgeführt wird.

Gemäß einem alternativen Ausführungsbeispiel der genannten Weiterbildung wird das Verfahren immer dann durchgeführt, wenn das Kraftfahrzeug länger als einen vorgegebenen Zeitraum stillsteht. Ein vorgegebener Zeitraum kann beispielsweise durch ein Zeitglied in der Zentraleinheit erfaßt werden. Der Vorteil dieses Ausführungsbeispiels ist darin zu sehen, daß das Verfahren nicht nach jeder Stillegung des Kraftfahrzeuges durchgeführt wird, sondern nur dann, wenn die Dauer der Stillegung einen vorgegebenen Zeitraum überschreitet. Bevorzugt wird der vorgegebene Zeitraum so lang gewählt, daß innerhalb dieses Zeitraums ein Radwechsel ausgeschlossen ist. Als ein solcher Zeitraum können beispielsweise ca. 5 - 30 Minuten angenommen werden. Der Vorteil dieses Ausführungsbeispiels ist darin zu sehen, daß eine neue Zuordnung nicht immer vorgenommen wird und somit häufig bereits bei Fahrtantritt die aktuelle Zuordnung in der Zentraleinheit gespeichert ist.

Weitere Vorteile und ein Ausführungsbeispiel werden im Zusammenhang mit den nachstehenden Figuren erläutert, darin zeigt:
Figur 1 ein Kraftfahrzeug mit einem Luftdruckkontrollsystem
Figur 2 ein Kraftfahrzeug mit einem Luftdruckkontrollsystem.

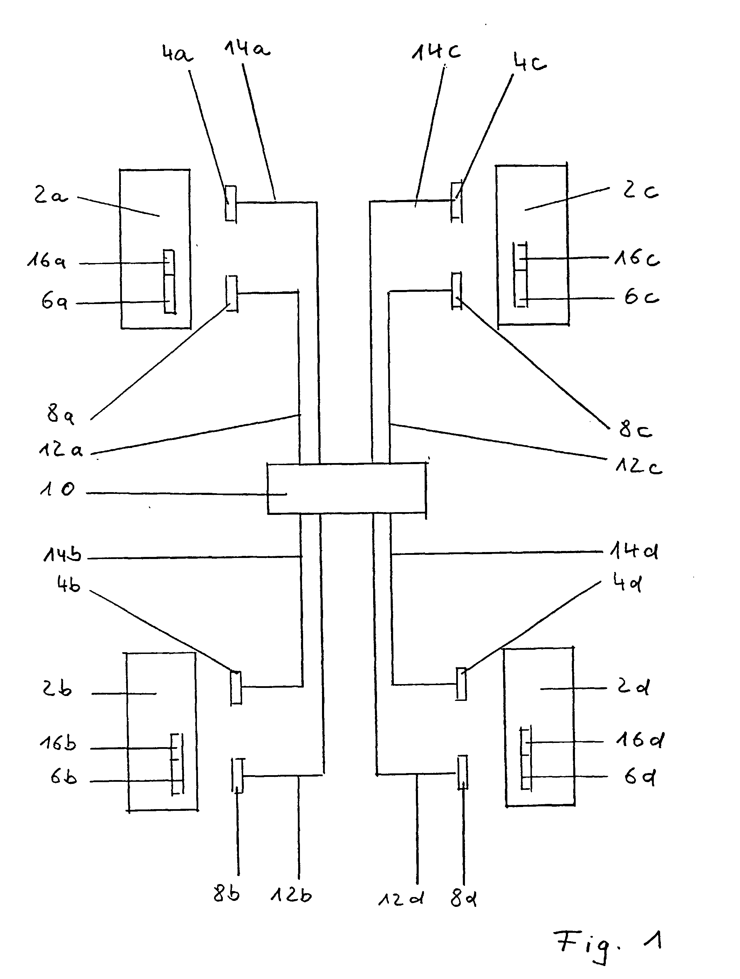

Die Figur 1 zeigt ein Kraftfahrzeug mit Rädern 2a bis 2d, das über ein Luftdruckkontrollsystem verfügt. Das Luftdruckkontrollsystem enthält u.a. Luftdruckkontrollvorrichtungen 6a bis 6d, von denen jeweils eine in dem Reifen der Kraftfahrzeugräder 2a bis 2d enthalten ist, (z.B. im Reifengummi bzw. im oder am Ventil) oder von denen jeweils eine einem Reifen zugeordnet ist, z.B. durch entsprechende Positionierung und Befestigung an der Felge. Die Luftdruckkontrollvorrichtungen 6a bis 6d verfügen über einen Sender, mit Hilfe dessen sie Daten an die den Luftdruckkontrollvorrichtungen 6a bis 6d zugeordneten Empfänger 8a bis 8d berührungslos übermitteln können. Darüber hinaus verfügen die Luftdruckkontrollvorrichtungen 6a bis 6d über Sensoren erste Meßvorrichtungen 16a bis 16d, deren Funktion später erläutert wird. Die Empfänger 8a bis 8d übermitteln die von den Luftdruckkontrollvorrichtungen 6a bis 6d empfangenen Daten über Übertragungswege 12a bis 12d an eine Zentraleinheit 10. Die Empfänger 8a bis 8d können auch durch einen einzigen Empfänger ersetzt werden, der beispielsweise in der Zentraleinheit 10 angeordnet ist und die Signale aller Luftdruckkontrollvorrichtungen 6a bis 6d empfängt. In diesem Fall kann auf die Übertragungswege 12a bis 12d von den Empfängern 8a bis 8d zu der Zentraleinheit verzichtet werden. Im einfachsten Fall sind die Empfänger 8a bis 8d bzw. der einzige Empfänger als Empfangsantennen ausgebildet.

Das Luftdruckkontrollsystem enthält neben den Sensoren 16a bis 16d Sensoren zweite Meßvorrichtungen 4a bis 4d, die an dem Kraftfahrzeug befestigt sind und jeweils einem Rad 2a bis 2d des Kraftfahrzeuges fest zugeordnet sind. Die Sensoren 4a bis 4d stehen über Übertragungswege 14a bis 14d ebenfalls mit der Zentraleinheit 10 in Verbindung.

Im Folgenden wird die Funktionsweise des Luftdruckkontrollsystems erläutert. Vor oder bei der Inbetriebnahme wird automatisch der Zuordnungsmodus des Luftdruckkontrollsystems eingeschaltet. Dies kann beispielsweise dadurch geschehen, daß durch Einschalten der Zündung in einem Mikroprozessor der Zentraleinheit 10 ein Unterprogramm "Zuordnungsmodus" aufgerufen wird, das daraufhin "abgearbeitet" wird und die Zuordnung steuert. In dem Zuordnungsmodus werden sowohl von den Sensoren 16a bis 16d, die den Luftdruckkontrollvorrichtungen 6a bis 6d zugeordnet sind, als auch von den Sensoren 4a bis 4d Meßgrößen, die im Betrieb des Kraftfahrzeuges zumindest zeitweise für jedes Kraftfahrzeugrad 2a bis 2d des Kraftfahrzeuges individuell sind, aufgenommen und in der Zentraleinheit 10 ausgewertet. Im folgenden Beispiel wird davon ausgegangen, daß es sich hierbei um die Raddrehzahl der einzelnen Kraftfahrzeugräder 2a bis 2d handelt und die Sensoren 16a bis 16d und 4a bis 4d dementsprechend als Drehzahlsensoren ausgebildet sind. Die von den Sensoren 16a bis 16d gemessenen Raddrehzahlen werden zusammen mit den individuellen Kennungen der Luftdruckkontrollvorrichtungen 6a bis 6d und den Druckwerten sowie ggf. weiteren Meßwerten an die Empfänger 8a bis 8d und von dort über die Übertragungswege 12a bis 12d an die Zentraleinheit 10 übermittelt. In der Zentraleinheit 10 liegen also für jedes Kraftfahrzeugrad 2a bis 2d Wertepaare der Form (individuelle Kennung einer Luftdruckkontrollvorrichtung/Raddrehzahl) vor, wobei von diesen Wertepaaren noch nicht bekannt ist, von welcher Radposition aus sie gesendet worden sind.

Die von den Sensoren 4a bis 4d gemessenen Raddrehzahlen werden über die Übertragungswege 14a bis 14 d ebenfalls an die Zentraleinheit 10 übermittelt. Da die Sensoren 4a bis 4d den einzelnen Rädern 2a bis 2d des Kraftfahrzeuges fest zugeordnet sind, "weis" die Zentraleinheit, an welcher Radposition die entsprechende Raddrehzahl gemessen worden ist (aufgrund der festen Zuordnung weis die Zentraleinheit 10 beispielsweise, daß der Sensor 4a die Reddrehzahl des vorderen linken Kraftfahrzeugrades 2a sendet usw.).

In der Zentraleinheit 10 werden alle von den Sensoren 16a bis 16d der Luftdruckkontrollvorrichtungen 6a bis 6d übermittelten Raddrehzahlen mit allen von den Sensoren 4a bis 4d übermittelten Raddrehzahlen verglichen. Eine feste Zuordnung einer Luftdruckkontrollvorrichtung 6a bis 6d zu einer Radposition wird in der Zentraleinheit dann vorgenommen, wenn die von einem Sensor 16a bis 16d gemessene Raddrehzahl mit der von einem der Sensoren 4a bis 4d gemessenen Raddrehzahl genügend genau übereinstimmt. Die entsprechende Zuordnung (individuelle Kennung einer Luftdruckkontrollvorrichtung/Radposition) wird dann in der Zentraleinheit 10 gespeichert (beispielsweise liegt eine Übereinstimmung der gemessenen Raddrehzahlen vor, wenn die von dem Sensor 16a gemessene Raddrehzahl mit der von dem Sensor 4a gemessene Raddrehzahl verglichen wird; die Zentraleinheit "weis", daß die entsprechenden gemessenen Raddrehzahlen von dem Kraftfahrzeugrad 2a vorne links stammen, da der Sensor 4a dieser Radposition vorne links fest zugeordnet ist. Dementsprechend ordnet die Zentraleinheit 10 die von der Luftdruckkontrollvorrichtung 6a übermittelte individuelle Kennung der Radposition vorne links des Kraftfahrzeugrades 2a zu und speichert diese ab. Entsprechend wird mit den anderen Radpositionen verfahren. Sind auf diese Art und Weise alle entsprechenden Zuordnungen erstellt und abgespeichert, ist die Zuordnung abgeschlossen, und der Zuordnungsmodus wird automatisch verlassen. Dies kann beispiels wiederum dadurch geschehen, daß nach der Abspeicherung der Zuordnungen das Unterprogramm "Zuordnungsmodus" eines Mikroprozessors der Zentraleinheit 10 verlassen wird.

Beispiel: Von den vier Luftdruckkontrollvorrichtungen 6a bis 6d gelangen an die Zentraleinheit 10 die Wertereihen (K₁; 100; 2,0); (K₂; 115; 2,0); (K₃; 105; 2,2); (K₄; 120; 2,2), wobei Kᵢ i = 1...4 jeweils die Kennung, der mittlere Wert in jeder Klammer jeweils die Raddrehzahl und der letzte Wert in den Klammern jeweils den Druck bedeuten kann. Die Zentraleinheit 10 "weis" zunächst nicht, von welcher Radposition welche Wertereihe stammt. Zusätzlich gelangen von den Drehzahlsensoren 4a bis 4d die gemessenen Raddrehzahlen an die Zentraleinheit 10, nämlich in diesem Fall, z.B. 98 von dem Sensor 4a, 113 von dem Sensor 4c, 105 von dem Sensor 4b und 122 von dem Sensor 4d. Die Zentraleinheit 10 "weis" aufgrund der festen Zuordnung der Sensoren 4a bis 4d zu den Radpositionen, daß die Drehzahl 98 an dem Rad 2a vorne links, die Drehzahl 113 an dem Rad 2c vorne rechts, die Drehzahl 105 an dem Rad 2b hinten links und die Drehzahl 122 an dem Rad 2d hinten rechts gemessen wurde. Durch Vergleich der von den Luftdruckkontrollvorrichtungen 6a bis 6d gemessenen Raddrehzahlen mit den von den Sensoren 4a bis 4d gemessenen Raddrehzahlen kann die Zentraleinheit 10 nun die die individuellen Kennungen Kᵢ, i = 1...4 den Radpositionen zuordnen, insbesondere bei diesem Beispiel also folgende Zuordnungen treffen: (K₁; Radposition "Vorne links" des Rades 2a); (K₂; Radposition "Vorne rechts" des Rades 2c); (K₃; Radposition "Hinten links" des Rades 2b); (K₄; Radposition "Hinten rechts" des Rades 2d), da an den entsprechenden Rädern die beste Übereinstimmung zwischen den unabhängig voneinander gemessenen Raddrehzahlen besteht. Die entsprechenden Zuordnungen werden in der Zentraleinheit 10 gespeichert und im Drucküberwachungsmodus verwendet. Kann eine eindeutige Zuordnung auf Basis der gemessenen Werte nicht durchgeführt werden, z.B. weil an zwei oder mehr Rädern 2a bis 2d von den Sensoren 4a bis 4d gleiche Raddrehzahlen gemessen werden, so wird der Zuordnungsmodus fortgesetzt, bis dies möglich ist.

Durch die im Zuordnungsmodus übermittelten Druckwerte wird nur dann eine Warnung ausgelöst, wenn ein bestimmter Mindestdruckwert von z.B. 1,2 bar unterschritten wird.

Im Drucküberwachungsmodus funktioniert das Luftdruckkontrollsystem wie bekannt. Das heißt, von den Luftdruckkontrollvorrichtungen 6a bis 6d werden individuelle Kennungen zusammen mit gemessenen Druckwerten und ggf. weiteren Meßwerten sowie Werten der Raddrehzahl an die Empfänger 8a bis 8d übermittelt und von dort an die Zentraleinheit 10 weitergegeben. In der Zentraleinheit 10 werden die übermittelten individuellen Kennungen mit den gespeicherten Kennungen verglichen und bei Übereinstimmung wird ermittelt, von welcher Radposition die individuelle Kennung mit dem dazugehörigen Druckwert gesendet worden ist. Die Raddrehzahlen werden von der Zentraleinheit 10 im Drucküberwachungsmodus nicht ausgewertet. Weicht der übermittelte Druckwert oder eine der anderen Meßgrößen an einem der Kraftfahrzeugräder 2a bis 2d in unzulässiger Weise von einem vorgegebenen Wert ab, so wird dies dem Kraftfahrzeugführer gemeldet, so daß er entsprechende Maßnahmen einleiten kann.

Beispiel: Von den Luftdruckkontrollvorrichtungen 6a bis 6d werden wiederum Wertereihen der Form (K₁; 150; 1,5); (K₂; 153; 2,0); (K₃; 149; 2,2); (K₄; 147; 2,2) an die Zentraleinheit 10 übermittelt. Aufgrund der gespeicherten Zuordnungen (s. oben) kann die Zentraleinheit 10 ermitteln, daß die erste Wertereihe von der Radposition "Vorne links", die zweite Wertereihe von der Radposition "Vorne rechts", die dritte Wertereihe von der Radposition "Hinten links" und die vierte Wertereihe von der Radposition "Hinten rechts" übermittelt wurde, da die entsprechenden individuellen Kennungen in der übermittelten Wertereihe und der gespeicherten Zuordnung bei diesen angegebenen Radpositionen übereinstimmen. Die Zentraleinheit 10 kann nun feststellen, daß der Druck von 1,5 bar an der Radposition "Vorne links" der Druck von 2,0 bar an der Radposition "Vorne rechts" und der Druck von 2,2 jeweils an den Radpositionen "Hinten links" und "Hinten rechts" gemessen wurde. Gegebenenfalls kann eine Warnung abgegeben werden, wenn einer der gemessenen Luftdrücke von einem vorgegebenen Wert abweicht. Im genannten Beispiel wird eine Warnung abgegeben, da der Luftdruck von 1,5 bar an der Radposition "Vorne links" zu niedrig ist.

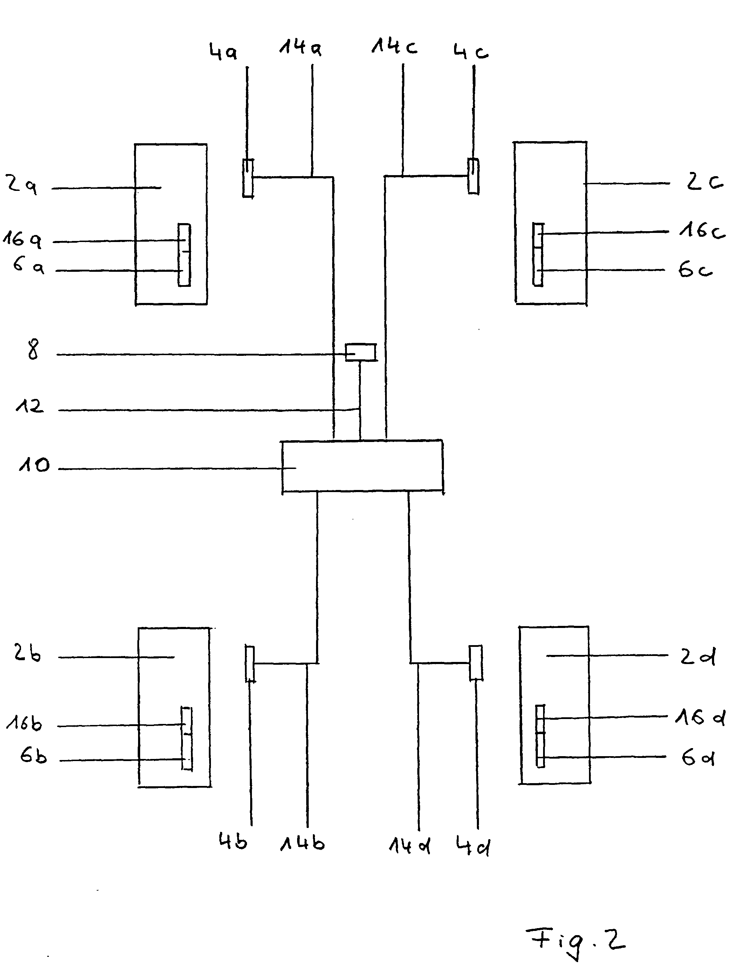

Figur 2 zeigt ein Kraftfahrzeug mit Rädern 2a bis 2d, das über ein Luftdruckkontrollsystem verfügt, das an sich genau so aufgebaut ist, wie das in der Figur 1 gezeigt Luftdruckkontrollsystem. Ein Unterschied ist lediglich darin zu sehen, daß nicht jeder der Luftdruckkontrollvorrichtungen 6a bis 6d ein separater Empfänger zugeordnet ist, sondern vielmehr nur ein einziger Empfänger 8 (z.B. als Antenne ausgebildet) vorgesehen ist, der über lediglich einen Übertragungsweg 12 mit der Zentraleinheit 10 in Verbindung steht. Sämtliche von den Luftdruckkontrollvorrichtungen 6a bis 6d ausgesendeten Signale werden von dem Empfänger 8 empfangen und über den Übertragungsweg 12 an die Zentraleinheit 10 übermittelt. Die Funktionsweise des in der Figur 2 gezeigten Luftdruckkontrollsystems ist mit der Funktionsweise des in der Figur 1 gezeigten Luftdruckkontrollsystems identisch, so daß diesbezüglich hier lediglich auf die obigen Ausführungen verwiesen sei.

### Bezugszeichenliste

- 2a - 2d: Kraftfahrzeugrad
- 4a - 4d: Sensor, der Rad fest zugeordnet ist
- 6a - 6d: Luftdruckkontrollvorrichtung mit Sensor
- 8a - 8d: Empfänger
- 10: Zentraleinheit
- 12a - 12d: Übertragungsweg von Empfänger 8a - 8d zur Zentraleinheit 10
- 14a - 14d: Übertragungsweg von Sensor 4a - 4d zur Zentraleinheit 10
- 16a - 16d: Sensoren der Luftdruckkontrollvorrichtungen 6a - 6d

## Patentansprüche

1. Verfahren zur Durchführung einer Zuordnung einer Radposition zu Luftdruckkontrollvorrichtungen (6a-6d) in einem Luftdruckkontrollsystem eines Kraftfahrzeuges, das eine Anzahl von Rädern (2a-2d) aufweist, wobei das Luftdruckkontrollsystem Luftdruckkontrollvorrichtungen (6a-6d), erste Meßvorrichtungen (16a-16d), zweite Meßvorrichtungen (4a-4d), mindestens einen Empfänger und eine Zentraleinheit (10) umfaßt, wobei jedem Rad (2a-2d) eine Luftruckkontrollvorrichtung (6a-6d) mit einer individuellen Kennung zugeordnet wird, wobei jeder Luftdruckkontrollvorrichtung je eine der ersten Messvorrichtungen zugeordnet wird, wobei je eine der zweiten Messvorrichtungen (4a-4d) jeweils ortsfest und ausserhalb des jeweiligen Rades (2a-2d) befestigt und der jeweiligen Radposition des Rades (2a-2d), der Zentraleinheit bekannt, zugeordnet wird, und wobei die Zuordnung der Luftruckkontrollvorrichtungen (6a-6d) zu den Radpositionen im Betrieb des Kraftfahrzeuges wie folgt durchgeführt wird:
- Einschalten eines Zuordnungsmodus des Luftdruckkontrollsystems,
- Messung einer Messgröße an jedem Rad (2a-2d) des Kraftfahrzeuges, welche zumindest zeitweise für jedes Rad (2a-2d) des Kraftfahrzeuges einen charakteristischen Wert annimmt, mit der ersten Messvorrichtung (16a-16d),
- Messung der gleichen Messgröße an jedem Rad (2a-2d) des Kraftfahrzeuges mit der jeweiligen zweiten Messvorrichtung (4a-4d),
- Übermittlung der individuellen Kennungen der Luftdruckkontrollvorrichtungen (6a-6d) zusammen mit den Messwerten der ersten Messvorrichtungen (6a-6d) über den mindestens einen Empfänger (8, 8a-8d) an die Zentraleinheit (10),
- Übermittlung der Messwerte der zweiten Messvorrichtungen (4a-4d) an die Zentraleinheit (10),
- Vergleichen der von den ersten Messvorrichtungen (16a-16d) gemessenen Messwerte mit den von den zweiten Messvorrichtungen (4a-4d) gemessenen Messwerten, wobei bei genügender Übereinstimmung eines der Messwerte der ersten Messvorrichtungen (16a-16d) mit einem der Messwerte der zweiten Messvorrichtungen (4a-4d) darauf geschlossen wird, dass die zusammen mit dem Messwert der ersten Messvorrichtung (16a-16d) übermittelte individuelle Kennung zu der Radposition des übereinstimmenden Messwertes der zweiten Messvorrichtung (4a-4d) gehört,
- Speichern der Zuordnung der individuellen Kennung der jeweiligen Luftdruckkontrollvorrichtung (6a-6d) zu der jeweiligen Radposition des entsprechenden Rades (2a-2d) in der Zentraleinheit (10),
- Ausschalten des Zuordnungsmodus und Betreiben des Luftdruckkontrollsystems in einem Drucküberwachungsmodus.

2. Verfahren zur Durchführung der Zuordnung der Radposition zu Luftdruckkontrollvorrichtungen (6a-6d) nach Anspruch 1, **dadurch gekennzeichnet, dass** an jedem Rad (2a-2d) des Kraftfahrzeuges die Raddrehzahl oder eine mit der Raddrehzahl korrespondierende Messgröße von den ersten (16a-16d) und den zweiten Messvorrichtungen (4a-4d) gemessen wird.

3. Verfahren zur Durchführung der Zuordnung der Radposition zu Luftdruckkontrollvorrichtungen nach Anspruch 1, **dadurch gekennzeichnet, daß** an jedem Rad (2a - 2d) des Kraftfahrzeuges die Geräuschentwicklung oder das Schwingungsverhalten oder die Reifentemperatur von den ersten (16a - 16d) und den zweiten Meßvorrichtungen (4a - 4d) gemessen wird.

4. Verfahren zur Durchführung der Zuordnung der Radpositionen zu Luftdruckkontrollvorrichtungen (6a - 6d) nach einem der Ansprüche 1 bis 3, **dadurch gekennzeichnet, daß**
- das Einschalten des Zuordnungsmodus vor oder bei Inbetriebnahme des Kraftfahrzeuges automatisch erfolgt,
- die Zuordnung der Luftdruckkontrollvorrichtung zu den Radpositionen des Kraftfahrzeuges erfolgt und
- nach abgeschlossener Zuordnung der Zuordnungsmodus automatisch verlassen wird.

5. Verfahren zur Durchführung der Zuordnung der Radposition zu Luftdruckkontrollvorrichtungen (6a - 6d) nach Anspruch 4, **dadurch gekennzeichnet, daß** das Verfahren bei jeder Inbetriebnahme des Kraftfahrzeuges durchgeführt wird.

6. Verfahren zur Durchführung der Zuordnung der Radposition zu Luftdruckkontrollvorrichtungen nach Anspruch 5, **dadurch gekennzeichnet, daß** das Verfahren immer dann durchgeführt wird, wenn das Kraftfahrzeug länger als einen vorgegebenen Zeitraum stillsteht.

7. Luftdruckkontrollsystem eines Kraftfahrzeuges, das u.a. über folgende Bestandteile verfügt:
- eine Anzahl von Rädern (2a-2d), wobei jedem Rad (2a-2d) eine Luftdruckkontrollvorrichtung (6a-6d) zugeordnet ist, die zur Aussendung einer individuellen Kennung an mindestens einen Empfänger in der Lage ist, der die individuelle Kennung einer Zentraleinheit (10) übermittelt, wobei die Zentraleinheit (10) die Zuordnung der individuellen Kennung der Luftkontrollvorrichtungen (6a-6d) zu der jeweiligen Radposition des entsprechenden Rades (2a-2d) speichert,
**dadurch gekennzeichnet, dass** das Luftdruckkontrollsystem
- erste Messvorrichtungen (16a-16d) umfasst, die jeweils einer Luftdruckkontrollvorrichtung (6a-6d) eines Rades (2a-2d) zugeordnet sind und die derart ausgebildet sind, dass mit ihnen eine Messgröße am jeweiligen Rad (2a-2d) gemessen wird, die im Betrieb des Kraftfahrzeuges zumindest zeitweise einen charakteristischen Wert annimmt,
- zweite Messvorrichtungen (4a-4d) umfasst, die jeweils ortsfest an dem Kraftfahrzeug angebracht und jeweils einem Rad (2a-2d) des Kraftfahrzeuges zugeordnet sind, wobei die Zuordnung der zweiten Messvorrichtungen (4a-4d) zu den Radpositionen der jeweiligen Räder (2a-2d) der Zentraleinheit (10) bekannt ist und wobei die zweiten Messvorrichtungen (4a-4d) derart ausgebildet sind, dass mit ihnen die gleiche Messgröße wie mit den ersten Messvorrichtungen (16a-16d) gemessen wird,
- mindestens einen Übertragungsweg (12a-12d) umfasst, auf dem die von den ersten Messvorrichtungen (16a-16d) gemessenen Messwerte zusammen mit den individuellen Kennungen der Luftdruckkontrollvorrichtungen (6a-6d) an die Zentraleinheit (10) übertragen werden,
- zweite Übertragungswege (14a-14d) umfasst, auf denen die von den zweiten Messvorrichtungen (4a-4d) gemessenen Messwerte an die Zentraleinheit (10) übertragen werden,
und dass die Zentraleinheit (10) derart ausgebildet ist, dass in ihr ein Vergleich zwischen den übertragenen Messwerten der ersten Messvorrichtungen (16a-16d) und den übertragenen Messwerten der zweiten Messvorrichtungen (4a-4d) durchgeführt wird, wobei bei genügender Übereinstimmung eines der Messwerte der ersten Messvorrichtungen (16a-16d) mit einem der Messwerte der zweiten Messvorrichtungen (4a-4d) darauf geschlossen wird, dass die zusammen mit dem Messwert der ersten Messvorrichtung (16a-16d) übermittelte individuelle Kennung der entsprechenden Luftdruckkontrollvorrichtung (6a-6d) zu der Radposition gehört, an der von der zweiten Messvorrichtung (4a-4d) der genügend übereinstimmende Messwert gemessen wurde und dass die Zentraleinheit (10) Speicher enthält, in der die bestimmte Zuordnung der individuelle Kennung der entsprechenden Luftdruckkontrollvorrichtung (6a-6d) zu der Radposition des jeweiligen Rades (2a-2d) gespeichert wird.

8. Luftdruckkontrollsystem nach Anspruch 7, **dadurch gekennzeichnet, dass** das Luftdruckkontrollsystem derart ausgebildet ist, dass
- es vor oder bei der Inbetriebnahme des Kraftfahrzeuges automatisch in einen Zuordnungsmodus geschaltet wird und dass
- nach abgeschlossener Zuordnung der Zuordnungsmodus automatisch abgeschaltet wird und das Luftdruckkontrollsystem ausschließlich in einem Drucküberwachungsmodus betrieben wird.

9. Luftdruckkontrollsystem nach einem der Ansprüche 7 bis 8, **dadurch gekennzeichnet, daß** die ersten Meßvorrichtungen (16a - 16d) die Raddrehzahl messen und die zweiten Meßvorrichtungen (4a - 4d), die einem Antiblockiersystem zugeordneten Raddrehzahlsensoren sind.

10. Luftdruckkontrollsystem nach Anspruch 9, **dadurch gekennzeichnet, daß** die ersten Meßvorrichtungen (16a - 16d) ein piezoelektrisches Element aufweisen, mit dessen Hilfe die Raddrehzahlen bestimmt werden.

## Claims

1. Method of accomplishing an allocation of a wheel position to air pressure control devices (6a-6d) in an air pressure control system of an automotive vehicle, which includes a number of wheels (2a-2d), wherein the air pressure control system includes air pressure control devices (6a-6d), first measuring devices (16a-16d), second measuring devices (4a-4d), at least one receiver (8, 8a-8d) and a central unit (10), wherein each wheel (2a-2d) has associated therewith an air pressure control device (6a-6d) provided with an individual identification, wherein each air pressure control device (6a-6d) has associated therewith one of the first measuring devices (16a-16d), wherein each one of the second measuring devices (4a-4d) is mounted in a stationary manner and externally of the respective wheel (2a-2d) and is associated with the respective wheel position of the wheel (2a-2d), known to the central unit (10), and wherein the allocation of the air pressure control devices (6a-6d) to the wheel positions during the operation of the automotive vehicle is accomplished as follows:
- switching-on an allocation mode of the air pressure control system,
- measuring, by means of the first measuring device (16a-16d), a measurement variable at each wheel (2a-2d) of the automotive vehicle, which variable assumes a characteristic value at least with respect to time for each wheel (2a-2d) of the automotive vehicle,
- measuring the same measurement variable at each wheel (2a-2d) of the automotive vehicle by means of the respective second measuring devices (4a-4d),
- transmitting the individual identifications of the air pressure control devices (6a-6d), together with the measured values of the first measuring devices (16a-16d), to the central unit (10) via the at least one receiver (8, 8a-8d),
- transmitting the measured values of the second measuring devices (4a-4d) to the central unit (10),
- comparing the measured values, measured by the first measuring devices (16a-16d), with the measured values measured by the second measuring devices (4a-4d), wherein, if one of the measured values of the first measuring device (16a-16d) corresponds sufficiently to one of the measured values of the second measuring device (4a-4d), it is concluded that the individual identification, transmitted together with the measured value of the first measuring device (16a-16d), belongs to the wheel position of the corresponding measured value of the second measuring device (4a-4d),
- storing the allocation of the individual identification of the respective air pressure control device (6a-6d) to the respective wheel position of the corresponding wheel (2a-2d) in the central unit (10), and
- switching-off the allocation mode and operating the air pressure control system in a pressure monitoring mode.

2. Method of accomplishing the allocation of the wheel position to air pressure control devices (6a-6d) according to claim 1, **characterised in that** the wheel rotational speed or one measurement variable, corresponding to the wheel rotational speed, is measured at each wheel (2a-2d) of the automotive vehicle by the first (16a-16d) and the second measuring devices (4a-4d).

3. Method of accomplishing the allocation of the wheel position to air pressure control devices (6a-6d) according to claim 1, **characterised in that** the development of noise or the oscillation behaviour or the tyre temperature is measured at each wheel (2a-2d) of the automotive vehicle by the first (16a-16d) and the second measuring devices (4a-4d).

4. Method of accomplishing the allocation of the wheel position to air pressure control devices (6a-6d) according to one of claims 1 to 3,
**characterised in that**
- the switching-on of the allocation mode is automatically effected before or when the automotive vehicle is put into operation,
- the allocation of the air pressure control devices (6a-6d) to the wheel positions of the automotive vehicle is effected, and
- the allocation mode is automatically discontinued after the allocation has terminated.

5. Method of accomplishing the allocation of the wheel position to air pressure control devices (6a-6d) according to claim 4, **characterised in that** the method is accomplished each time the automotive vehicle is put into operation.

6. Method of accomplishing the allocation of the wheel position to air pressure control devices (6a-6d) according to claim 5, **characterised in that** the method is always accomplished when the automotive vehicle is stationary for longer than a prescribed period.

7. Air pressure control system of an automotive vehicle, which has, inter alia, the following constituent components:
- a number of wheels (2a-2d), wherein each wheel (2a-2d) has associated therewith an air pressure control device (6a-6d), which is capable of transmitting an individual identification to at least one receiver, which transmits the individual identification to a central unit (10), the central unit (10) storing the allocation of the individual identification of the air control devices (6a-6d) to the respective wheel position of the corresponding wheel (2a-2d),
**characterised in that** the air pressure control system
- includes first measuring devices (16a-16d), which are each associated with an air pressure control device (6a-6d) of a wheel (2a-2d), and which are configured in such a manner that they measure a measurement variable, which assumes a characteristic value at least with respect to time during the operation of the automotive vehicle, at the respective wheel (2a-2d),
- includes second measuring devices (4a-4d), which are each attached to the automotive vehicle in a stationary manner and associated with a respective wheel (2a-2d) of the automotive vehicle, the allocation of the second measuring devices (4a-4d) to the wheel positions of the respective wheels (2a-2d) being known to the central unit (10), and the second measuring devices (4a-4d) being configured in such a manner that they measure the same measurement variable as the first measuring devices (16a-16d),
- includes at least one transmission path (12a-12d), on which the measured values, measured by the first measuring devices (16a-16d), together with the individual identifications of the air pressure control devices (6a-6d), are transmitted to the central unit (10), and
- includes second transmission paths (14a-14d), on which the measured values, measured by the second measuring devices (4a-4d), are transmitted to the central unit (10),
and **in that** the central unit (10) is configured in such a manner that a comparison is accomplished therein between the transmitted measured values of the first measuring devices (16a-16d) and the transmitted measured values of the second measuring devices (4a-4d), wherein, if one of the measured values of the first measuring device (16a-16d) corresponds sufficiently to one of the measured values of the second measuring device (4a-4d), it is concluded that the individual identification of the corresponding air pressure control device (6a-6d), transmitted together with the measured value of the first measuring device (16a-16d), belongs to the wheel position at which the sufficiently corresponding measured value was measured by the second measuring device (4a-4d), and **in that** the central unit (10) includes memories in which the specific allocation of the individual identification of the corresponding air pressure control device (6a-6d) to the wheel position of the respective wheel (2a-2d) is stored.

8. Air pressure control system according to claim 7, **characterised in that** the air pressure control system is configured in such a manner that
- it is automatically switched into an allocation mode before or when the automotive vehicle is put into operation, and
- the allocation mode is automatically switched-off after the allocation has been terminated, and the air pressure control system is exclusively operated in a pressure monitoring mode.

9. Air pressure control system according to one of claims 7 to 8, **characterised in that** the first measuring devices (16a-16d) measure the wheel rotational speed, and the second measuring devices (4a-4d) are the wheel rotational speed sensors associated with an anti-lock braking system.

10. Air pressure control system according to claim 9, **characterised in that** the first measuring devices (16a-16d) have a piezoelectric element, by means of which the wheel rotational speeds are determined.

## Revendications

1. Procédé de réalisation d'une affectation d'une position de roue à des dispositifs (6a - 6d) de vérification de la pression de gonflage dans un système de vérification de la pression de gonflage d'un véhicule automobile qui comprend un nombre de roues (2a - 2d), où le système de vérification de la pression de gonflage comprend des dispositifs (6a - 6d) de vérification de la pression de gonflage, des premiers dispositifs de mesure (16a - 16d), des seconds dispositifs de mesure (4a - 4d), au moins un récepteur (8, 8a - 8d) et une unité centrale (10), où un dispositif (6a - 6d) de vérification de la pression de gonflage, comprenant une identification individuelle, est affecté à chaque roue (2a - 2d), où, à chaque fois, un des premiers dispositifs de mesure (16a - 16d) est affecté à chaque dispositif (6a - 6d) de vérification de la pression de gonflage, où, à chaque fois, un des seconds dispositifs de mesure (4a - 4d) est fixé respectivement à un emplacement fixe et à l'extérieur de la roue respective (2a - 2d) et est affecté à la position de roue respective - connue de l'unité centrale (10) - de la roue (2a - 2d) et où l'affectation des dispositifs (6a - 6d) de vérification de la pression de gonflage, aux positions de roue, est effectuée, comme suit, au cours du fonctionnement du véhicule automobile, en procédant :
- à la mise en oeuvre d'un mode d'affectation du système de vérification de la pression de gonflage,
- à la mesure, avec le premier dispositif de mesure (16a - 16d), d'une grandeur mesurée sur chaque roue (2a - 2d) du véhicule automobile, laquelle grandeur mesurée prend une valeur caractéristique, au moins temporairement, pour chaque roue (2a - 2d) du véhicule automobile,
- à la mesure, avec le second dispositif de mesure respectif (4a - 4d), de la même grandeur mesurée sur chaque roue (2a - 2d) du véhicule automobile,
- à la transmission à l'unité centrale (10), par l'au moins un récepteur (8, 8a - 8d), des identifications individuelles des dispositifs (6a - 6d) de vérification de la pression de gonflage ainsi que des valeurs mesurées des premiers dispositifs de mesure (16a - 16d),
- à la transmission à l'unité centrale (10), des valeurs mesurées des seconds dispositifs de mesure (4a - 4d),
- à la comparaison des valeurs mesurées par les premiers dispositifs de mesure (16a - 16d), avec les valeurs mesurées par les seconds dispositifs de mesure (4a - 4d), où, en cas d'une concordance suffisante de l'une des valeurs mesurées du premier dispositif de mesure (16a - 16d), avec Tune des valeurs mesurées du second dispositif de mesure (4a - 4d), il est décidé que l'identification individuelle, transmise en même temps que la valeur mesurée du premier dispositif de mesure (16a - 16d), appartient à la position de roue de la valeur mesurée, concordante, du second dispositif de mesure (4a - 4d),
- à la mémorisation, dans l'unité centrale (10), de l'affectatio de l'identification individuelle du dispositif respectif (6a - 6d) de vérification de la pression de gonflage, à la position de roue respective de la roue correspondante (2a - 2d),
- à l'arrêt du mode d'affectation et à l'activation du système de vérification de la pression de gonflage passant en mode de surveillance de la pression.

2. Procédé de réalisation de l'affectation de la position de roue à des dispositifs (6a - 6d) de vérification de la pression de gonflage selon la revendication 1, **caractérisé en ce que**, sur chaque roue (2a - 2d) du véhicule automobile, la vitesse de roue ou une grandeur mesurée, correspondant à la vitesse de roue, est mesurée par les premiers (16a - 16d) et par les seconds (4a - 4d) dispositifs de mesure.

3. Procédé de réalisation de l'affectation de la position de roue à des dispositifs (6a - 6d) de vérification de la pression de gonflage selon la revendication 1, **caractérisé en ce que**, sur chaque roue (2a - 2d) du véhicule automobile, les phénomènes de bruit ou le comportement lors de vibrations ou la température du pneumatique sont mesurés par les premiers (16a - 16d) et par les seconds (4a - 4d) dispositifs de mesure.

4. Procédé de réalisation de l'affectation de la position de roue à des dispositifs (6a - 6d) de vérification de la pression de gonflage selon l'une des revendications 1 à 3,
**caractérisé**
- **en ce que** la mise en oeuvre du mode d'affectation a lieu automatiquement avant ou lors de la mise en route du véhicule automobile,
- **en ce qu'**il se produit l'affectation des dispositifs (6a - 6d) de vérification de la pression de gonflage, aux positions de roue du véhicule automobile, et
- **en ce que** l'on sort automatiquement du mode d'affectation, une fois que l'affectation est terminée.

5. Procédé de réalisation de l'affectation de la position de roue à des dispositifs (6a - 6d) de vérification de la pression de gonflage selon la revendication 4, **caractérisé en ce que** le procédé est effectué lors de chaque mise en route du véhicule automobile.

6. Procédé de réalisation de l'affectation de la position de roue à des dispositifs (6a - 6d) de vérification de la pression de gonflage selon la revendication 5, **caractérisé en ce que** le procédé est toujours effectué, lorsque le véhicule automobile est à l'arrêt pendant une période de temps plus longue qu'un laps de temps prédéterminé.

7. Système de vérification de la pression de gonflage d'un véhicule automobile qui comprend, entre autres éléments, des composants suivants tels :
- qu'un nombre de roues (2a - 2d), où un dispositif (6a - 6d) de vérification de la pression de gonflage est affecté à chaque roue (2a - 2d), lequel dispositif de vérification est en mesure d'envoyer une identification individuelle à au moins un récepteur qui transmet l'identification individuelle à une unité centrale (10), où l'unité centrale (10) stocke en mémoire l'affectation de l'identification individuelle des dispositifs (6a - 6d) de vérification de la pression de gonflage, à la position de roue respective de la roue correspondante (2a - 2d),
**caractérisé**
**en ce que** le système de vérification de la pression de gonflage comprend
- des premiers dispositifs de mesure (16a - 16d) qui sont affectés, respectivement, à un dispositif (6a - 6d) de vérification de la pression de gonflage d'une roue (2a - 2d) et sont configurés de façon telle, qu'une grandeur soit mesurée sur la roue respective (2a - 2d), avec ces dispositifs de mesure, laquelle grandeur mesurée prend une valeur caractéristique, au moins temporairement, au cours du fonctionnement du véhicule automobile,
- des seconds dispositifs de mesure (4a - 4d) qui sont placés à chaque fois, à un emplacement fixe, sur le véhicule automobile, et sont affectés à chaque fois à une roue (2a - 2d) du véhicule automobile, où l'affectation des seconds dispositifs de mesure (4a - 4d), à des positions des roues respectives (2a - 2d), est connue de l'unité centrale (10), et où les seconds dispositifs de mesure (4a - 4d) sont configurés de façon telle, qu'avec ces mêmes dispositifs de mesure, on mesure la même grandeur qu'avec les premiers dispositifs de mesure (16a - 16d),
- au moins une trajectoire de transmission (12a - 12d) sur laquelle sont transmises, à l'unité centrale (10), les valeurs mesurées par les premiers dispositifs de mesure (16a - 16d), en même temps que les identifications individuelles des dispositifs (6a - 6d) de vérification de la pression de gonflage,
- des secondes trajectoires de transmission (14a - 14d) sur lesquelles sont transmises, à l'unité centrale (10), les valeurs mesurées par les seconds dispositifs de mesure (4a - 4d), et
**en ce que** l'unité centrale (10) est configurée de façon telle, qu'une comparaison est effectuée, dans cette même unité centrale, entre les valeurs mesurées et transmises des premiers dispositifs de mesure (16a - 16d), et les valeurs mesurées et transmises des seconds dispositifs de mesure (4a - 4d), où, dans le cas d'une concordance suffisante de l'une des valeurs mesurées du premier dispositif de mesure (16a - 16d) avec l'une des valeurs mesurées du second dispositif de mesure (4a - 4d), il est décidé que l'identification individuelle du dispositif correspondant (6a - 6d) de vérification de la pression de gonflage, transmise en même temps que la valeur mesurée du premier dispositif de mesure (16a - 16d), appartient à la position de roue sur laquelle a été mesurée, par le second dispositif de mesure (4a - 4d), la valeur mesurée qui concorde de façon suffisante, et
**en ce que** l'unité centrale (10) contient des mémoires dans lesquelles est mémorisée l'affectation déterminée de l'identification individuelle du dispositif correspondant (6a - 6d) de vérification de la pression de gonflage, à la position de la roue respective (2a - 2d).

8. Système de vérification de la pression de gonflage selon la revendication 7, **caractérisé en ce que** le système de vérification de la pression de gonflage est configuré de façon telle,
- qu'il est mis en oeuvre automatiquement en mode d'affectation, avant ou au moment de la mise en route du véhicule automobile, et
- que le mode d'affectation est arrêté automatiquement, une fois que l'affectation est terminée, et le système de vérification de la pression de gonflage est actionné exclusivement en mode de surveillance de la pression.

9. Système de vérification de la pression de gonflage selon la revendication 7 ou 8, **caractérisé en ce que** les premiers dispositifs de mesure (16a - 16d) mesurent la vitesse de roue, les seconds dispositifs de mesure (4a - 4d) étant des capteurs de vitesse de roue qui sont affectés à un système d'antiblocage.

10. Système de vérification de la pression de gonflage selon la revendication 9, **caractérisé en ce que** les premiers dispositifs de mesure (16a - 16d) comprennent un élément piézoélectrique à l'aide duquel sont déterminées les vitesses de roue.
